Europäisches Patentamt

European Patent Office

Office européen des brevets

(11) Numéro de publication: **0 109 885**

**B1**

(12) **FASCICULE DE BREVET EUROPEEN**

(45) Date de publication du fascicule du brevet: **13.07.88**

(51) Int. Cl.⁴: **F 16 D 3/30**

(21) Numéro de dépôt: **83402149.5**

(22) Date de dépôt: **04.11.83**

(54) Joint de cardan grand angulaire.

(30) Priorité: **04.11.82 FR 8218831**

(43) Date de publication de la demande:
**30.05.84 Bulletin 84/22**

(45) Mention de la délivrance du brevet:
**13.07.88 Bulletin 88/28**

(84) Etats contractants désignés:
**CH DE GB IT LI SE**

(56) Documents cités:
**DE-C- 563 328**
**FR-A- 722 653**
**FR-A- 777 985**
**FR-A- 818 717**
**FR-A- 867 840**
**FR-A- 913 217**
**FR-A- 994 937**
**US-A- 2 662 381**

**Le dossier contient des informations
techniques présentées postérieurement au
dépôt de la demande et ne figurant pas dans le
présent fascicule.**

(73) Titulaire: **Vejux, Michel**
**5 bis Rue de Strasbourg**
**F-90000 Belfort Territoire de Belfort (FR)**

(72) Inventeur: **Vejux, Michel**
**5 bis Rue de Strasbourg**
**F-90000 Belfort Territoire de Belfort (FR)**

(74) Mandataire: **Letheule, Jacqueline**
**5 Rue José-Maria de Hérédia**
**F-75007 Paris (FR)**

Courier Press, Leamington Spa, England.

## Description

La présente invention concerne d'une façon générale l'accouplement de deux arbres en rotation concourants disposés à la suite les une des autres et définissant entre aux des angles incidents fixes ou mobiles, par des moyens connus sous le nom de joints universels ou joints de cardan.

On connaît déjà par le document FR—A—867 840 une articulation pour relier deux arbres comprenant deux fourches symétriques décalées de 90°, l'entraînement se faisant au moyen de quatre galets disposés en croix entre celles-ci et maintenus dans le plan médian par des moyens de guidage centraux appropriés. Cependant, dans ce joint, les surfaces de roulement situées de part et d'autre des galets cassent d'être parallèles dès que l'angle incident est différent de zéro. En conséquence, au'delà d'un certain angle d'incidence, de l'ordre de 15 à 20°, un glissement à frottement se substitue au roulement, et la limite du débattement de ce joint est atteinte. Ce joint est donc désavantageux en ce qu'il est à frottements élevés, et que son débattement reste limité. En outre, de par sa structure, il ne peut accepter des efforts axiaux importants.

La document FR—A—722 653 enseigne un joint universel comprenant deux fourches symétriques décalées de 90°, l'entraînement étant réalisé par l'intermédiaire d'un noyau central présentant quatre pivots principaux tenant lieu de croisillons. De plus, la surface intérieure de chaque fourche présente une gorge circulaire concentrique au point central. Cependant ce joint est désavantageux en ce que ces gorges limitent sensiblement non débattement angulaire. En outre, il ne peut supporter aucun effort axial important.

Enfin, l'effort qui est nécessaire pour maintenir le noyau central dans le plan médian lorsque l'angle d'incidence n'est pas nul et que le couple menant est élevé se répercute sur les rotules (27, 28) et tend à provoquer le décentrage de l'arbre mené par rapport à l'arbre menant. Enfin, le jeu important des pièces d'entraînement entre elles tend à provoquer une usure prématurée.

Le document FR—A—913 217 concerne un joint universel qui présente sensiblement les mêmes inconténients que le document FR—A—869 840.

Enfin, le document FR—A—777 985 concerns un joint brisé synchrone à action centrale comprenant deux fourches dissymétriques disposées dans un même plan l'une à l'intérieur de l'autre, l'entraînement étant réalisé au moyen d'un noyau central et d'une couronne extérieure articulés l'un sur l'autre par un axe intermédiaire solidaire d'un anneau extérieur de guidage. Il comprend également un organe de guidage constitué d'un boîtier extérieur à l'intérieur duquel une bague mobile peut, par coulissement radial, assurer le guidage de l'ensemble.

Copendant, le joint de ce brevet présente plusieurs inconvénients: d'une part le fait que les fourches soient situées dans le même plan limite nécessairement l'angle de débattement à une valeur inférieure à 90°. De plus, la transmission du couple s'effectue dans ce joint par une série de renvois angulaires de 90° via un grand nombre d'éléments successifs articulés entre eux et susceptibles de se déformer. L'organe de guidage est quant à lui relativement encombrant et présente un grand nombre de parties en frottement.

L'invention vise à pallier ces inconvénients et à proposer un joint universel capable d'opérer avec des frottements tout à fait réduits entre deux arbres dont le décalage angulaire est élevé, excédant par exemple 45°, on encore un joint universel capable d'opérer à des vitesses de rotation élevées.

A cet effet l'invention concerne un joint universel utilisable pour l'accouplement de deux arbres de transmission convergents présentant entre eux un angle d'incidence fixe ou mobile limité à 90° du type comprenant deux fourches symétriques décalées angulairement de 90°, un noyau intermédiaire de contour sensiblement sphérique comportant quatre pivots principaux, et des moyens de guidage, caractérisé en ce que le noyau intermédiaire est constitué de deux parties distinctes disposées concentriquement, à savoir une partie centrale de conformation sphérique et une partie périphérique de conformation annulaire, lesdites deux parties étant oscillantes l'une sur l'autre selon deux axes orthogonaux constitués par un couple de galets diamétralement opposés de ladite partie centrale coulissant dans une rainure de ladite partie périphérique.

On comprendra mieux les caractéristiques et avantages de l'invention en se référant à la description suivante et au dessin annexé à titre d'exemple non limitatif, dans lequel:

La Figure 1 est un schéma géométrique de principe d'un joint selon l'invention;

la Figure 2A est une vue en perspective éclatée du joint de l'invention,

la Figure 2B illustre une variante de réalisation d'un organe du joint représenté sur la Figure 2A.

Dans la description qui suit, on désignera par:

M: l'élément moteur ou menant, ou dépendant de celui-ci,

N: le noyau intermédiaire,

R: l'élément récepteur ou mené, ou dépendant de celui-ci.

Les déplacements angulaires, vitesse angulaire instantanée et accélération angulaire seront respectivement désignés par $\varphi$, $\omega$, $\rho$ avec les indices correspondants.

Les axes sont désignés par des minuscules séparées par un tiret. Les plans par la lettre P. L'angle incident entre les axes a—a et b—b des fourches M et R est désigné par $\alpha$.

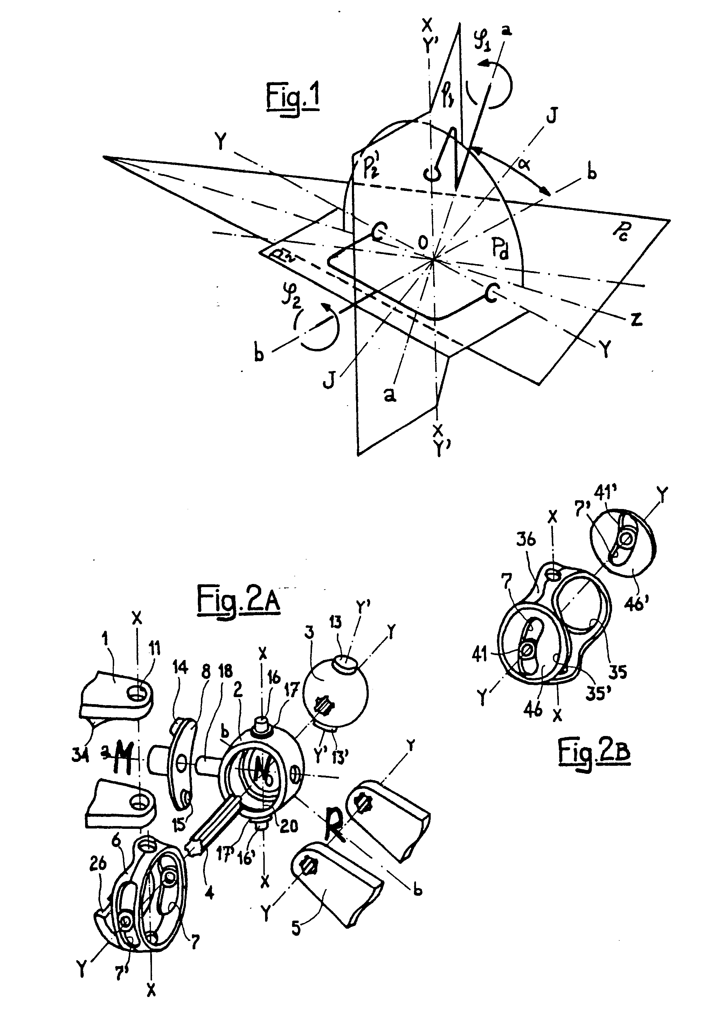

En référence au dessin, en particulier à la Figure 2, le joint de la présente invention a un aspect extérieur et un volume pratiquement identiques à ceux d'un joint simple conventionnel. Comme celui-ci, il est constitué de trois parties principales: deux fourches symétriques 1, 5 décalées de 90° et d'un élément intermédiaire ou noyau, 3, 4 inscrit dans un volume sphérique, et réalisant une jonction articulée de type triaxiale entre lesdites fourches. Le joint comporte quatre pivots principaux opposés deux à deux et, par une conformation appropriée du noyau qui intègre un organe de guidage, comme on le voit plus loin, il instaure les conditions d'un entraînement homocinétique de la partie menée du joint par la partie manante.

En bref, la transmission du couple moteur de la partie M vers la partie R s'effectue à travers un organe mobile intermédiaire 2 conformé et orienté d'une façon telle qu'en constituant simultanément une liaison dite quadrant, tant vis à vis de la partie située en amont (M) que de la partie située en aval (R), il réalise les conditions géométriques nécessaires pour que les variations cycliques résultant de la liaison primaire M—N soient compensées par les variations inverses de la liaison secondaire N—R. Ce résultat étant obtenu par une conception particulière du noyau interposé entre les fourches M et R du joint, comme décrit ci-dessous.

Le noyau du joint de l'invention est constitué en deux parties distinctes 3, 2 disposées concentriquement; une partie centrale 3, de conformation sphérique est complétement solidaire de la fourche R par l'intermédiaire d'un axe goujoné 4 disposé transversalement entre les branches de ladite fourche et passant diamétralement par le centre 0 de la partie centrale 3, le tout formant un ensemble rigide centré sur l'axe b—b de l'arbre récepteur R. Grâce à cette disposition, la partie sphérique 3 se trouve intégrée et solidarisée à la partie R du joint. La sphère 3 comporte deux galets diamétralement opposés 13 et 13' libres en rotation autour d'un axe polaire y'—y' en formant deux saillies opposées sur le galbe de la partie centrale sphérique 3. Notons que l'axe y'—y' est simultanément perpendiculaire à y—y et b—b.

Une partie annulaire 2, disposée à l'extérieur de la partie sphérique 3 dans lesens longitudinal, constitue l'unique partie mobile intermédiaire entre les parties M et R du joint. Son diamètre intérieur correspond à celui de la sphère 3 et son diamètre extérieur à celui de l'espace disponible entre les branches de la fourche 1. Elle est solidaire de cette dernière en rotation par deux pivots opposés 16 et 16' qui tourill onnent à l'intérieur de coussinets associés supportés par les branches de ladite fourche.

La face intérieure de l'anneau 2 comporte un chemin de roulement 20 circulaire et s'étendant continûment sur 360°, de profil complémentaire au profil convexe constitué par la saillie des galets 13, 13' sur la surface de la sphère 3.

La face extérieure de l'anneau 2 comporte, outre les deux pivots 16 et 16' un axe intermédiaire 18 perpendiculaire aux axes précédents et tenant lieu de support du levier 8. L'axe 18 permet ainsi le guidage directionnel de la partie annulaire.

Le fonctionnement du joint de la figure 2A est le suivant: Rappelons tout d'abord que l'obtention d'un mouvement parfaitement homocinétique implique trois conditions:

1) Les axes de rotation des fourches M et R doivent être concourants en un point donné.

2) Les axes des articulations des fourches M et R doivent être constamment situés dans un même plan.

3) Les angles incidents propres à chacun des cardans élementaires doivent demeurer égaux en valeur absolue en toutes positions.

Dans le joint de l'invention, la vérification de la condition 1) résulte de la disposition concentrique des deux parties constitutives 2, 3 du noyau.

La vérification de la condition 2) est obtenue en conformant la partie annulaire 2 qui maintient les axes x—x des pivots 16, 16' et y'—y' des galets 13, 13' sur un même plan. La vérification de la condition 3) résulte de l'inclinaison de la partie annulaire 2 par rapport aux axes a—a et b—b des parties M et R du joint.

Notons que, sur ce type de joint, les liaisons de l'anneau 2 avec la fourche M d'une part et avec la sphère 3, donc avec la partie R d'autre part, sont de type dit "liaison quadrant" et, sous cet aspect, chacune d'elle peut être assimilée à un carden élémentaire; Dans de telles conditions, pour obtenir un mouvement résultant parfaitement homocinétique il faut et il suffit que l'inclinaison de l'anneau intermédiaire 2 soit telle qu'elle assure en permanence l'égalité des angles incidents propres à chacun des "cardans élémentaires" précités.

Cette égalité réciproque résulte du positionnement donné par l'organe de guidage (décrit plus loin) à l'anneau intermédiaire 2, celui-ci étant maintenu selon une orientation définie pour que le plan directeur Pd (Figure 1) du joint occupe en permanence et pour chaque valeur de φ et α une position médiane déterminée par les axes a—a et b—b, étant admis que chacun d'eux est convergent au centre 0 de l'ensemble.

L'organe de guidage mentionné ci-dessous peut recevoir de multiples variantes selon les modéles de joint, comme on le verra par la suite, mais toutes ont en commun de réaliser une liaison simultanée de l'anneau intermédiaire 2 avec les parties M et R du joint, cette liaison étant plus ou moins évoluée selon que le joint est du genre homocinétique ou semi-homocinétique.

Dans le joint semi-homocinétique de la Figure 2A (variantes agricoles ou industrielles avec α<60°), l'organe de guidage est simplifié et comprend deux éléments, à savoir tout d'abord un levieur diviseur 8 axé en son milieu sur le pivot auxiliaire 18 de l'anneau 2. Par l'une de ses extrémités 14, il s'engage dans la glissière 34 pour coulisser, éventuellement par un galet intermédiaire. Par son autre extrémité 15, il s'engage de façon identique dans la glissière 26 d'une couronne directrice 6 qui occupe à l'intérieur de la fourche 1 une position opposée et symétrique de la précédente. Le levier 8 ne pouvant prendre directement appui par son extrémité 15 sur la fourche opposée 5, la couronne directrice 6 constitue le relais necessaire entre l'axe 4 et l'extrémité 15 du levier 8. De conformation circulaire, elle est interposée transversalement à l'axe principal du joint entre la face extérieure de l'anneau 2 et la face intérieure des fourches 1, 5.

Elle est axée diamétralement sur l'axe x—x en prenant appui sur les embases 17 et 17' des pivots 16, 16', ses faces latérales (parties comprises entre les bases de pivotement) présentant deux ouvertures oblongues 7 et 7' tenant lieu de glissières à l'intérieur desquelles les deux extrémités de l'axe 4 (y—y) peut osciller. La glissière 26 est incorporés à la couronne 6 au voisinage de son pivot inférieur. Par cette disposition, lorsque la fourche 5 pivote autour de l'axe y'—y', l'axe 4 entraîne la courenne 6 autour de l'axe x—x, qui sert de centre de pivotement commun aux glissières 34 et 26 en réalisant les conditions de positionnement et symétrie nécessaires au mouvement du levier 8.

Une variante d'organe de guidage 8, 6 représenté sur la Figure 2A consiste à dédoubler ses éléments constitutifs. On trouvera donc deux leviers diviseurs diamétralement opposés de part et d'autre du noyau et agissant en parallèle, leurs effets s'ajoutant. Cette disposition autorise un relèvement très sensible du couple admissible sous grand angle d'incidence.

Notons que le type de joint décrit ci-dessus n'est pas parfaitement homocinétique, l'écart angulaire entre M et R étant de l'ordre de 1° pour α=45°).

Cependant le faible écart angulaire qui subsiste dans le joint décrit ci-dessus peut être éliminé, ainsi que le point mort dû à l'alignement des axes pour obtenir un joint parfaitement homocinétique, grâce à une conformation appropriée de l'organe de guidage; simultanément le fonctionnement sous un angle incident de 90° devient possible. En référence à la Figure 2B, la couronne directrice 36 présente, à la place des évidements latéraux de la Figure 2A, deux alésages de grand diamètre 35 et 35' à l'intérieur desquels deux calottes sphériques 46 et 46', comportant chacune une ouverture oblongue 7 et 7' respectivement, sont enchâssées de façon à être mobiles angulairement, leur mouvement étant parallèle et simultané. Ce mouvement est commandé par le déplacement de la fourche 5 et de son axe autour de y—y, la transmission s'opérant selon un rapport de 1/2 indépendamment des oscillations. (Ceci est obtenu par l'intermédiaire d'un dispositif coulissant et réducteur (non représenté) intercalé entre l'axe 4 et les calottes 46 et 46'.

On notera que l'organe de guidage de la forme de réalisation ci-dessus peut également être dédoublé. Dans ce cas la butée extérieure 34 de la fourche 1 disparait et la couronne 36 prend la forme d'une sphère complètement fermée. La liaison des leviers 8 avec la fourche 1 s'obtient grâce au prolongement vers l'intérieur de celle-ci du coussinet 11, qui se termine par un évassement sur lequel les deux leviers diviseurs opposés viennent prendre appui. Le pivotement de la couronne s'opère alors sur la face circulaire située à l'extérieur du coussinet, la solidarité avec la fourche ayant été préalablement renforcée de façon appropriée.

D'après la description qui précéde, on notera que le joint de l'invention présente un certain nombre d'avantages:

1) Le fonctionnement avec un angle d'incidence atteignant 90° devient possible, ce débattement étant autorisé à la fois par le noyau et par l'organe de guidage.

2) L'organe de guidage s'approche de façon optimale des conditions géométriques de l'homocinétisme parfait, et maintient celle-ci sur la totalité de la gamme d'angles d'incidence possibles. Simultanément il annule 1 écarts angulaire.

3) Parallèlement, la conception même du noyau permet de supprimer les parties qui resteraient soumises à des variations angulaires, et les vitesses instantanées de chacun des éléments constitutifs du joint (fourches, noyau et organe de guidage) sont rigoureusement égales et constantes, d'où possibilité d'augmenter la vitesse de rotation sous des angles même importants.

4) Les deux formes de réalisation de joints décrites présentent la particularité de transmettre une partie du flux énergétique à travers l'organe de guidage. Ceci permet, un angle d'incidence donné, de maintenir le couple transmis à une valeur la plus proche possible du couple nominal (en théorie 50% pour le joint homocinétique lorsque α=90°).

5) La conception de l'organe de guidage permet d'éliminer dans les deux formes de réalisation certains effets secondaires, notamment des effets de décentrage.

6) Le noyau et l'organe de guidage assurent un équilibre centrifuge correct de l'ensemble du joint, indépendamment de l'angle incident.

De plus, dans le présent joint, la sphère 3 et l'anneau 2 sont constitués d'éléments fermés, de façon à former un ensemble qui présente une rigidité structurale maximale.

En outre, les pivots des axes x—x et y'—y' sont situés les uns en face des autres, d'où le minimum de déformation de l'élément intermédiaire 2. Cette disposition permet une rigidité maximale.

D'autre part, le joint de l'invention permet une répartition optimale de la matière constitutive (notamment en ce qui concerne l'anneau intermédiaire) ce qui permet de réduire au maximum la masse d'inertie des parties qui ne sont pas en rotation uniforme.

Le noyau pourra comporter divers types de galets (on coulisses), en fonction de l'effort à transmettre, ceux-ci servant à la fois à la transmission du couple et au centrage de l'anneau 2 sur la sphère 3. Dans le cas où le joint doit supporter un effort axial (ou un couple moteur) important, les galets 13 et 13' pourront être remplacés par un coulisseau circulaire entourant complètement la partie sphérique 3 et mobile à l'intérieur du chemin de roulement 20 en demeurant axé sur la sphère d'une façon identique aux galets précités. Par cette disposition on augmente la surface d'appui entre la sphère 3 et l'anneau 2, et la sphère peut alors tenir lieu de rotule de poussée.

Enfin, le noyau étant constitué d'une sphère 3 oscillant au centre d'un anneau 2 de diamètre correspondant, une étanchéité efficace pourra être obtenue en toute position grâce à deux joints circulaires (non représentés) disposés entre ces éléments.

En particulier, selon les exigences et les applications, on pourra prévoir tout système de graissage, joint d'étanchéité, roulement à billes ou à rouleaux intermédiaires destinés à limiter les frottements.

L'invention pourra s'appliquer avantageusement aux domaines agricole, industriel, etc... les caractéristiques de robustesse, d'homocinétie et de frottements pouvant être largement modifiées en fonction des exigences.

## Revendications

1. Joint universel prévu pour assurer l'accouplement de deux arbres de transmission convergents présentant entre eux un angle d'incidence fixe ou mobile limité à 90°, du genre comprenant deux fourches symétriques (1, 5) décalées augulairement de 90°, un noyau intermédiaire (3, 4, 2) de contour sensiblement sphérique comportant quatre pivots principaux, et des moyens de guidage (6; 36; 8), caractérisé en ce que le noyau intermédiaire est constitué de deux parties distinctes disposées concentriquement, comprenant une partie centrale de conformation sphérique (3) et une partie périphérique (2) de conformation annulaire, lesdites deux parties étant oscillantes l'une sur l'autre selon deux axes orthogonaux constitués par un couple de galets diamétralement opposés (13, 13') de ladite partie centrale coulissant dans une rainure (20) de ladite partie périphérique, de manière à obtenir des vitesses de rotations élevées sous des angles même importants et à réduire les frottements entre les deux arbres.

2. Joint selon la revendication 1, caractérisé en ce que la partie centrale (3) du noyau sphérique est maintenue totalement solidaire de l'une des fourches (5) par l'intermédiaire d'un axe transversal (4).

3. Joint selon l'une des revendications 1 et 2, caractérisé en ce que l'orientation de l'axe des galets (13, 13') à l'intérieur de la partie périphérique (2) est directement déterminée par la position de ladite fourche (5).

4. Joint selon l'une des revendications 1 à 3, caractérisé en ce que lesdites deux parties constituant le noyau sont formées d'éléments formée.

## Patentansprüche

1. Universal-Kardangelenk zur Verkupplung von zwei konvergenten Antriebswellen, die einen feststehenden oder mobilen, auf 90° begrenzten Winkel zueinander bilden, bestehend aus zwei um 90° versetzte, symetrischen Gabeln (1, 5), einem sphärisch geformten Zwischenkern (3, 4, 2) mit vier Hauptdrehpunkten und den entsprechenden Führungen (6, 36, 8), dadurch gekennzeichnet, daß der Zwischenkern aus zwei verschiedenen, konzentrisch angeordneten Teilen besteht, die in der Mitte eine Kugel (3) bilden und jeweils einen ringförmigen Teil (2) besitzen, wobei diese beiden Teile aufeinander in zwei rechtwinkligen Achsen, die aus einem dem Mittelteil, der in einer Nute (20) der Endteile gleitet, gegenuberliegenden Rollensatz (13, 13') bestehen, schwingen, und somit hohe Drehzahlen selbst bei großen Winkeln erhalten werden und die Reibung zwischen den beiden Wellen reduziert wird.

2. Kardangelenk gemäß Anspruch 1, dadurch gekennzeichnet, daß der mittlere Teil (3) des kugelförmigen Kerns rest durch eine querverläufende Achse (4) in einer der Gabeln (5) gehalten wird.

3. Kardangelenk gemäß einer der Anspruche 1 oder 2, dadurch gekennzeichnet, daß die Ausrichtung der Achse der Rollen (13, 13') innen im Endteil (2) direkt durch die Position dieser Gabel (5) bestimmt ist.

4. Kardangelenk gemäß einer der Anspruche 1 bis 3, dadurch gekennzeichnet, daß diese beiden den Kern bildenden Teile aus geschlossenen Elementen bestehen.

## Claims

1. Universal joint designed for effecting the coupling of two converging driving shafts forming a fixed or changeable angle limited to 90°, of the type comprising two symmetrical forks (1, 5), 90° angularly offset, an intermediary core (3, 4, 2) materially spherically shaped comprising four main pivots and guiding means (6; 36; 8), characterized in that the intermediary core is formed of two separate parts concentrically disposed, including a central part of spherical structure (3) and a peripheric part (2) of annular structure, both said parts rocking on one another along two orthogonal axes constituted by a couple of diametrally opposed rollers (13, 13') of said central part sliding in a groove (20) of said peripheric part, so to attain high rotation speeds even for important angles and to reduces friction between the two shafts.

2. Joint according to claim 1, characterized in that the central part (3) of the spherical core is maintained integral with one of the forms (5) by the intermediary of a transversal axis (4).

3. Joint according to claims 1 to 2, characterized in that the orientation of the roller axis (13, 13') within the peripheric part (2) depends directly of the position of said fork (5).

4. Joint according anyone of claims 1 to 3, characterized in that the two said parts forming the core are constituted by closed elements.

Fig.1

Fig.2A

Fig.2B